# EUROPEAN PATENT APPLICATION

(11) **EP 4 306 819 A1**
(43) Date of publication of application: **17.01.2024**
(21) Application number: 22836752.0
(22) Date of filing: 27.06.2022
(51) Int. Cl.: F16D 65/09, F16D 121/14, F16D 49/00, F16H 37/12, F16D 65/14

(54) **SELF-LOCKING DEVICE SUITABLE FOR MOTOR, AND LINEAR ACTUATOR**

(30) Priority: 07.07.2021 CN 202110765784
(71) Applicant: Zhejiang Jiecang Linear Motion Technology Co., Ltd, Shaoxing, Zhejiang 312500 (CN)
(72) Inventor: WU, Shiqi, Shaoxing, Zhejiang 312500 (CN); CHEN, Ligang, Shaoxing, Zhejiang 312500 (CN)
(74) Representative: karo IP
(86) International application number: PCT/CN2022/101491
(87) International publication number: WO 2023/279998

(57) **Abstract**

Disclosed are a self-locking arrangement for a motor, and a linear actuator, which relate to motors. The motor has a self-locking capability, a good stability, a low noisy during operation, and a good user experience. The self-locking arrangement as disclosed includes an end cap mounted on the motor and a friction ring sleeved over a drive shaft of the motor, a notch being provided on the friction ring, a limiting portion being provided at an outer periphery of the friction ring, the end cap being fitted with the limiting portion, so that the friction ring clasps the drive shaft in a case where the drive shaft rotates along a first direction.

## Description

### FIELD

The subject matter described herein relates to the field of motors, and more particularly relates to a self-locking arrangement for a motor, and a linear actuator.

### BACKGROUND

A driver is a device that generates a force, e.g., a rotary force, to be outputted via an output shaft. Drivers are widely applied in various equipment. To guarantee operational stability of equipment, self-locking capability is essential to the output shaft so as to avoid external force-induced malfunction, e.g., the output shaft cannot rotate when being subjected to an external force. An existing self-locking mechanism implements braking by a frictional force generated between a rotating output shaft and a friction block interference-fit mounted on the output shaft or by a frictional force generated between the friction block driven by the output shaft and a further friction part disposed external to the friction block. Such a self-locking mechanism is inconvenient to install, poor in stability, and likely noisy when operating due to installation-induced mechanical abrasions.

### SUMMARY

To overcome the above and more technical problems, a self-locking arrangement for a motor is provided, giving the motor a self-locking capability, a good stability, and a low noise during operation, whereby a good user experience is achieved.

The disclosure adopts a technical solution below:
A self-locking arrangement for a motor, comprising an end cap mounted on the motor and a friction ring sleeved over a drive shaft of the motor, a notch being provided on the friction ring, a limiting portion being provided at an outer periphery of the friction ring, the end cap being fitted with the limiting portion, so that the friction ring clasps the drive shaft in a case where the drive shaft rotates along a first direction.

Based on the technical solution above, at least two limiting portions are provided, the limiting portions being disposed on two sides of the notch, so that the friction ring clasps the drive shaft in a case where the drive shaft rotates along a second direction opposite the first direction.

Based on the technical solution above, at least one limiting portion is provided, one of the two sides of the notch being provided with the at least one limiting portion, the other side of the notch being a free end.

Based on the technical solution above, a raised ridge with a width identical to a width of the friction ring is provided at the outer periphery of the friction ring, the raised ridge being provided at the free end and having a length not exceeding half of a length of the friction ring.

Based on the technical solution above, a thickness of the friction ring is gradually shrunk inwards from two ends of the friction ring.

Based on the technical solution above, the limiting portion is a raised portion protruding from the outer periphery of the friction ring, and a catch portion fitted with the raised portion being provided on the end cap.

Based on the technical solution above, a connecting element connecting two ends of the friction ring is provided at the notch.

Based on the technical solution above, the connecting element is a spring; or, the connecting element is an elastic strip made of an elastic material; or, the connecting element is a rigid element passing through the two ends of the friction ring; or, the connecting element and the friction ring are one-piece formed, a thickness of the connecting element being smaller than that of the friction ring.

Based on the technical solution, the raised portion is a stop lever and the catch portion is a snap groove, the stop lever being snapped into the snap groove.

Based on the technical solution above, a limiting sleeve is provided in the end cap, the catch portion is provided on the limiting sleeve, and the friction ring is snapped in the limiting sleeve; or, a catch sleeve is sleeved outside the limiting portion, the catch sleeve being fitted with the catch portion.

Based on the technical solution above, the limiting portion is a recessed groove provided at the outer periphery of the friction ring, and a snap block fitted with the recessed groove is provided on the end cap.

Based on the technical solution above, center of the friction ring is offset from an axis of the drive shaft.

A linear actuator, comprising the self-locking arrangement for a motor as noted *supra.*

Based on the technical solution above, the linear actuator comprises a column, a lead screw assembly disposed in the column, and a worm gear for driving the lead screw assembly, the drive shaft being a worm fitted with the worm gear, the friction ring being also provided on a hub of the worm gear.

The disclosure offers the benefits below:
The self-locking arrangement according to the disclosure comprises the friction ring sleeved over the drive shaft, the friction ring being fitted with the end cap via the limiting portion to circumferentially limit the friction ring; the notch provided on the friction ring allows the friction ring to have a predetermined extent of deformation or a tendency of deformation in the radial direction; in a case where the drive shaft rotates along the first direction, a friction force between the drive shaft and the friction ring can drive the friction ring to rotate towards the first direction; however, since the friction ring is circumferentially limited, the friction force drives one of the two ends of the friction ring to have a tendency to approach to the other end, so that the friction ring clasps the drive shaft, whereby the acting force therebetween is enhanced, which can produce a larger friction force against the drive shaft, realizing braking to the drive shaft; when the friction ring clasps the drive shaft, the motor stops operation; at this point, the friction ring is still clasping the drive shaft, so that the drive shaft can hardly rotate under an external force;
during the braking process, the drive shaft may cause deformation of the friction ring, i.e., the inside diameter of the friction ring is shrunk and the gap between the two ends of the notch is narrowed, whereby the drive shaft is clasped by the friction ring; or, the inside diameter of the friction ring maintains unchanged, but the friction ring is brought by the drive shaft to press more tightly against the drive shaft, which may also increase the relative acting force therebetween.
when setting the self-locking arrangement, different braking forces to be adapted to different types and specifications of motors may be obtained by changing the number and/or adjusting positions of the limiting portions;
provision of the notch on the friction ring allows for an appropriate deformation of the friction ring for sleeving the friction ring over the drive shaft, which causes no abrasions or burrs to the surface of the drive shaft during assembly; as such, no annoying noise arises between the friction ring and the drive shaft upon braking, whereby user experience is enhanced; in addition, this structural design facilitates assembly and disassembly of the friction ring, such that once the braking force is deteriorated due to wear of the friction ring, it is also convenient to replace the worn friction ring.

Furthermore, at least two limiting portions are provided, the limiting portions being disposed on two sides of the notch, so that the friction ring clasps the drive shaft when the drive shaft rotates along a second direction opposite the first direction. It is noted that the first direction and the second direction refer to two opposite directions, i.e., forward/ reverse rotation of the drive shaft. The limiting portions serve to circumferentially limit the friction ring; positions dedicated for the limiting portions are set on the friction ring; position change tendency of the limiting portions is limited by the end cover. In a case where the drive shaft rotates in the first direction, one end of the friction ring at the notch is limited, while the other end of the friction ring can be driven by the drive shaft to act towards the first direction, whereby the drive shaft may be clasped by the friction ring (it is noted that action of one end of the friction ring may refer to deformation towards one direction, or no deformation occurs to the friction ring, but the friction ring has a tendency of deformation towards one direction); in a case where the drive shaft rotates in the second direction, the two ends of the friction ring at the notch act to the contrary, where the originally limited end acts towards the second direction while the other end of the friction ring is limited, so that the friction ring may also clasp the drive shaft, whereby the self-locking arrangement realizes two-way self-locking to the drive shaft; as such, during rotating of the drive shaft, the self-locking arrangement can always apply a friction force against the drive shaft, so that the motor may stop more quickly, which not only enhances motor control precision but also gives the motor a self-locking capability in an idle state, whereby motor stability is maintained.

Furthermore, at least one limiting portion is provided, one of the two sides of the notch being provided with the at least one limiting portion, the other side of the notch being a free end. The position where the limiting portion is set does not change with rotation of the driving shaft. The free end is not limited by the limiting portion; in a case where the drive shaft rotates in the first direction, the free end is driven to act along the first direction, so that the friction ring clasps the drive shaft to generate a braking force. In a case where the drive shaft rotates in the second direction, the free end is driven to act in the second direction, reducing the relative acting force between the friction ring and the drive shaft, i.e., the friction force therebetween is reduced, which reduces power loss of the motor. This setting may implement one-way self-locking to the drive shaft.

Furthermore, a raised ridge with a width identical to that of the friction ring is provided at the outer periphery of the friction ring, the raised ridge being provided at the free end and having a length not exceeding half of that of the friction ring. One end of the friction ring where the limiting portion is provided is limited. The raised ridge provided at the free end increases the thickness of the friction ring, so that the strength of this portion of friction ring is enhanced, which increases the acting force between this portion of friction ring and the drive shaft when the motor is in an idle state. The remaining portion of the friction ring is thinner; therefore, the free end acts more easily when being driven by the drive shaft; in this way, the self-locking arrangement may generate a larger braking force upon braking.

Furthermore, the thickness of the friction ring is gradually shrunk inwards from two ends. The two ends of the friction ring are the thickest; therefore, the relative acting force between the free end and the friction ring is also greater. The middle portion of the friction ring is thinner, so that deformation easily occurs there, and the two ends of the friction ring act more easily when being driven by the drive shaft, whereby a larger braking force may be generated. In a case where the self-locking arrangement performs one-way self-locking to the drive shaft, power loss is also reduced when the motor operates normally.

Furthermore, a connecting element connecting two ends of the friction ring is provided at the notch. The connecting element serves to maintain stability of the friction ring. The friction ring mounted on the drive shaft may be radially limited by the connecting element, preventing the friction ring from being disengaged from the drive shaft during assembling of the end cap.

Furthermore, the connecting element is a spring; or, the connecting element is an elastic strip made of an elastic material; or, the connecting element is a rigid element passing through two ends of the friction ring; or, the connecting element and the friction ring are one-piece formed, a thickness of the connecting element being smaller than that of the friction ring. The connecting element may have various structures. The spring has elasticity, which does not affect actions of the two ends of the friction ring; the rigid element passes through the friction ring, not fixed to the friction ring, without affecting the actions of the two ends of the friction ring either; the connecting element one-piece formed with the friction ring is thinner, such that the actions of the two ends of the friction ring will not be affected either.

Furthermore, the limiting portion is a raised portion protruding from the outer periphery of the friction ring, and a catch portion fitting with the raised portion being provided on the end cap. Positional change of the raised portion may be limited after the raised portion has been snapped into the catch portion; as such, the friction ring cannot rotate synchronously with the drive shaft; in addition, the rotational limitation may be implemented just by snapping the raised portion into the catch portion; therefore, a non-interference-fitting manner between the catch portion and the raised portion may facilitate mounting of the friction ring.

Furthermore, the limiting portion is a recessed groove provided at the outer periphery of the friction ring, and a snap block fitted with the recessed groove is provided on the end cap. Fitting between the snap block and the recessed groove may limit circumferential rotation of the friction ring, whereby the drive shaft is self-locked. The snap block protrudes from the inner wall of the end cap, which increases the thickness of the snap block, so that the friction ring at the recessed groove is interference-fitted with the drive shaft, whereby structural stability of the friction ring at that position is maintained without affecting deformation of the other portions of the friction ring.

Furthermore, center of the friction ring is offset from an axis of the drive shaft. As such, after the friction ring is sleeved over the drive shaft, a clearance is formed between part of the friction ring and the drive shaft; without support from the drive shaft, this part of friction ring is more easily deformed. In a case where the friction ring is set for implementing one-way self-locking to the drive shaft, upon braking, the drive shaft brings the friction ring to be deformed relatively largely, thereby generating a larger self-locking force; during normal rotation, the drive shaft brings the friction ring to be deformed reversely, which reduces the engagement area between the friction ring and the drive shaft, significantly reducing the impact of friction force upon rotation of the drive shaft.

The disclosure further provides a linear actuator, which is generally applied to lifting equipment, e.g., a lifting table and a lifting bed; the driver-mounted linear actuator is further installed in the lifting equipment. In a case where the lifting equipment bears a relatively heavy load, the self-locked driver ensures that the drive shaft does not rotate reversely causing retraction of the lifting equipment, whereby stability of the equipment is maintained.

Furthermore, the linear actuator comprises a column, a lead screw assembly disposed in the column, and a worm gear for driving the lead screw assembly, the drive shaft being a worm fitted with the worm gear, the friction ring being also provided on a hub of the worm gear. Provision of the friction ring on the hub of the worm gear allows for self-locking of the worm gear via the friction ring, and the fitting between the friction ring and the driver enhances self-locking performance of the linear actuator.

These features and advantages of the disclosure will be disclosed in detail through specific implementations described below with reference to the accompanying drawings.

### BRIEF DESCRIPTION OF THE DRAWINGS

Hereinafter, the disclosure will be further illustrated in conjunction with the accompanying drawings, in which:
Fig. 1 is a structural schematic diagram of a driver in some example embodiments of the disclosure;
Fig. 2 is an exploded view of a driver in some example embodiments of the disclosure;
Fig. 3 is an enlarged view of part A in Fig. 2;
Fig. 4 is a first structural schematic diagram of fitting between a friction ring and an end cap in some example embodiments of the disclosure;
Fig. 5 is structural schematic diagram A of a friction ring in some example embodiments of the disclosure;
Fig. 6 is structural schematic diagram B of a friction ring in some example embodiments of the disclosure;
Fig. 7 is structural schematic diagram C of a friction ring in some example embodiments of the disclosure;
Fig. 8 is structural schematic diagram D of a friction ring in some example embodiments of the disclosure;
Fig. 9 is structural schematic diagram E of a friction ring in some example embodiments of the disclosure;
Fig. 10 is structural schematic diagram F of a friction ring in some example embodiments of the disclosure;
Fig. 11 is structural schematic diagram G of a friction ring in some example embodiments of the disclosure;
Fig. 12 is structural schematic diagram H of a friction ring in some example embodiments of the disclosure;
Fig. 13 is structural schematic diagram I of a friction ring in some example embodiments of the disclosure;
Fig. 14 is structural schematic diagram J of a friction ring in some example embodiments of the disclosure;
Fig. 15 is structural schematic diagram K of a friction ring in some example embodiments of the disclosure;
Fig. 16 is a second structural schematic diagram of fitting between the friction ring and the end cap in some example embodiments of the disclosure;
Fig. 17 is structural schematic diagram L of a friction ring in some example embodiments of the disclosure;
Fig. 18 is structural schematic diagram M of a friction ring in some example embodiments of the disclosure;
Fig. 19 is structural schematic diagram N of a friction ring in some example embodiments of the disclosure;
Fig. 20 is an exploded view of a drive in a linear actuator in some example embodiments of the disclosure.

### Reference Numerals:

end cap 100; drive shaft 110; catch portion 120; limiting sleeve 130; snap block 140;
friction ring 200; notch 210; limiting portion 220; free end 230; raised ridge 240; connecting element 250;
outer ring 300; inner ring 310;
worm gear 400.

### DETAILED DESCRIPTION

Hereinafter, the technical solutions of the disclosure will be explained and illustrated through embodiments with reference to the accompanying drawings. However, the embodiments are only preferred embodiments of the disclosure, not all of them. Other embodiments derived by those skilled in the art without exercise of inventive work based on the examples in the embodiments all fall within the protection scope of the disclosure.

In the description of the disclosure, it needs to be understood that the orientational or positional relationships indicated by the terms "center," "longitudinal," "transverse," "length," "width," "thickness," "upper," "lower," "front," "rear," "left," "right," "vertical," "horizontal," "top," "bottom," "inner," "clockwise," and "counterclockwise" refer to those orientational and positional relationships illustrated in the drawings, which are intended only for facilitating description of the disclosure and simplifying relevant depictions, but not for indicating or implying that the devices or elements compulsorily possess such specific orientations or are compulsorily configured and operated with the specific orientations; therefore, such terms should not be construed as limitations to the disclosure.

Besides, the terms "first" and "second" are only used for descriptive purposes, which shall not be construed as indicating or implying relative importance or implicitly indicating the number of a referred to technical feature. Therefore, the features limited by "first" and "second" may explicitly or implicitly include one or more of such features. In the description of the present disclosure, unless otherwise indicated, "plurality" indicates two or above.

In the disclosure, unless otherwise explicitly provided and limited, the terms such as "mount," "connect," "attach," and "fix" should be understood broadly, which, for example, may refer to a fixed connection, a detachable connection, or an integrated connection; which may be a mechanical connection or an electrical connection; which may be a direct connection or an indirect connection via an intermediate medium; which may also be a communication between the insides of two elements. To a person of normal skill in the art, specific meanings of the above terms in the disclosure may be construed based on specific situations.

In the disclosure, unless otherwise explicitly provided and limited, an expression that a first feature is "above" or "below" a second feature may refer to a direct contact between the first feature and the second feature or may refer to a scenario where although the first feature and the second feature do not contact directly, they contact via a further feature therebetween. Moreover, the expression that the first feature is "above" or "over" or "on" the second feature refers to a situation where the first feature is exactly or generally over the second feature or only refers to a situation that the horizontal height of the first feature is higher than the second feature. The expression that the first feature is "under" or "below" or "beneath" the second feature refers to a situation where the first feature is exactly or generally below the second feature or only refers to a situation that the horizontal height of the first feature is lower than the second feature.

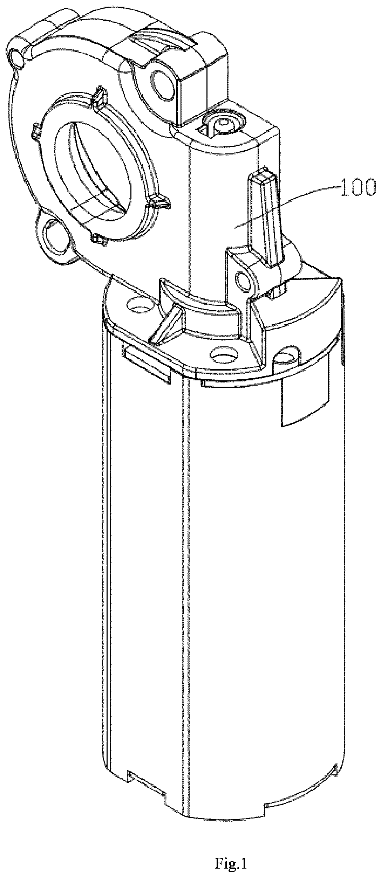

Referring to Figs. 1 to 5, embodiments of the disclosure disclose a self-locking arrangement for a motor, comprising: an end cap 100 mounted on a housing of the motor and a friction ring 200 sleeved over a drive shaft 110 of the motor, a notch 210 being provided on the friction ring 200, a limiting portion 220 being provided at an outer periphery of the friction ring 200, the end cap 100 being fitted with the limiting portion 220, so that the friction ring 200 clasps the drive shaft 110 in a case where the drive shaft 110 rotates along a first direction.

The self-locking arrangement according to the disclosure comprises the friction ring 200 sleeved over the drive shaft 110, the friction ring 200 being fitted with the end cap 100 via the limiting portion 220 to circumferentially limit the friction ring 200; the notch 210 on the friction ring 200 is formed with two ends on the friction ring 200, allowing the two ends of the friction ring 200 to have a predetermined extent of deformation or a tendency of deformation in the radial direction; in a case where the drive shaft 110 rotates along the first direction, a friction force between the drive shaft 110 and the friction ring 200 can drive the friction ring 200 to rotate towards the first direction; however, since the friction ring 200 is circumferentially limited, the friction force drives one of the two ends of the friction ring 200 to have a tendency to approach to the other end, so that the friction ring 200 clasps the drive shaft 110, whereby the acting force therebetween is enhanced, which can produce a larger friction force against the drive shaft 110, realizing braking to the drive shaft 110; when the friction ring 200 clasps the drive shaft 110, the motor stops operation; at this point, the friction ring 200 is still clasping the drive shaft 110, so that the drive shaft 110 can hardly rotate under an external force;
during the braking process, the drive shaft 110 causes deformation of the friction ring 200, i.e., the inside diameter of the friction ring 200 is shrunk and the gap between the two ends of the notch 210 is narrowed, whereby the drive shaft 110 is clasped by the friction ring 200; or, the inside diameter of the friction ring 200 maintains unchanged, but the friction ring 200 is brought by the drive shaft 110 to press more tightly against the drive shaft 110, which may also increase the relative acting force therebetween.

Provision of the notch 210 on the friction ring 200 allows for an appropriate deformation of the friction ring 200 for sleeving the friction ring 200 over the drive shaft 110, which causes no abrasions or burrs to the surface of the drive shaft 110 during assembly; as such, no annoying noise arises between the friction ring 200 and the drive shaft 110 upon braking, whereby user experience is enhanced; in addition, this structural design facilitates assembly and disassembly of the friction ring 200, such that once the braking force is deteriorated due to wear of the friction ring 200, it is also convenient to replace the worn friction ring 200.

In some implementations, the friction ring 200 has a substantially C-shape, whereby the notch 210 is formed between two ends thereof. In addition, the friction ring 200 may also be set in a shape of a torsional spring, which may also be driven to act by the drive shaft 110, thereby braking the drive shaft 110.

In some implementations, a material of the friction ring 200 selects plastics which has a high rigidity, a good bearing capacity, a high-temperature resistance, and a high strength, so that the friction coefficient of the friction ring 200 will not be degraded due to temperature elevation during operating, thereby maintaining a stable self-locking performance; in addition, the friction ring 200 has a better wear resistance and a longer service life.

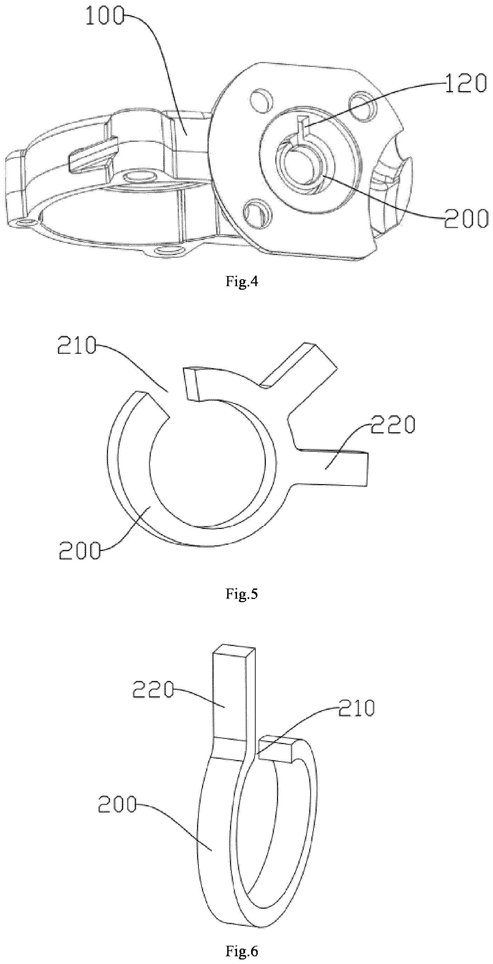

The self-locking arrangement may have different braking forces to be adapted to different types and specifications of motors by changing the number and/or adjusting positions of the limiting portions 220. The more the limiting portions 220 are set, the stronger the braking capability of the friction ring 200 is, and thus the less the friction ring 200 is affected by the drive shaft 110. As illustrated in Fig. 5, a plurality of limiting portions 220 are provided at local parts of the friction ring 200, whereby stability of the friction ring 200 may be enhanced. As the parts on the friction ring 200 where the limiting portions 220 are provided will be limited after the limiting portions 220 are fitted with the end cap 100, the self-locking performance of the friction ring 200 with respect to the drive shaft 110 may be adjusted by designing and adjusting the positions of the limiting portions 220 on the friction ring 200.

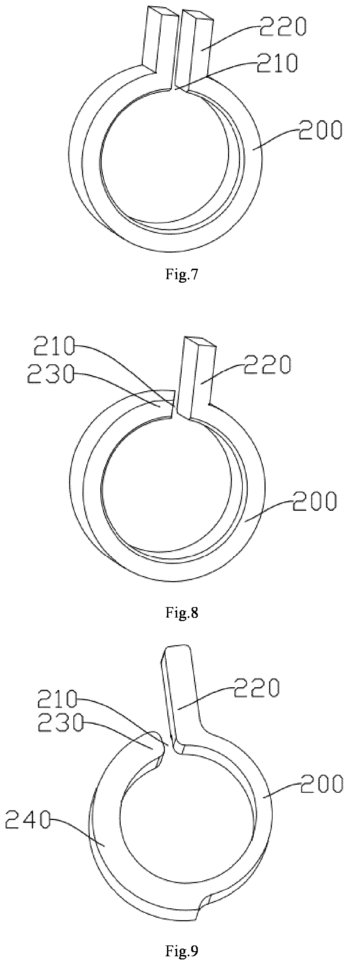

Referring to Fig. 7, based on the example embodiments described *supra,* in another implementation of the disclosure, the friction ring 200 enables two-way self-locking to the drive shaft 110.

In some implementations, at least two limiting portions 220 are provided, where both sides of the notch 210 are provided with a limiting portion 220, so that the friction ring 200 clasps the drive shaft 110 in a case where the drive shaft 110 rotates along a second direction opposite the first direction.

The first direction and the second direction noted *supra* refer to two opposite directions, i.e., forward/ reverse rotation of the drive shaft 110.

In some implementations, the fitting between the limiting portion 220 and a fitting portion on the end cap 100 is interference-fitting, which facilitates assembly of the friction ring 200 in the end cap 100; the fitting portion on the end cap 100 mainly serves to limit rotation of the friction ring 200, which allows for the friction ring 200 to rotate by a predetermined angle; in a case where the drive shaft 100 rotates, the friction ring 200 may be driven to rotate synchronously; after the friction ring 200 rotates by the predetermined angle, the limiting portion 220 abuts against the fitting portion on the end cap 100 and is thus stopped, whereby rotation of the friction ring 200 is limited.

The limiting portion 220 may be provided on the two ends of the friction ring 200 or provided at a position on the friction ring 200 proximal to the ends; the friction portions 220 may serve to circumferentially limit the friction ring 200; the friction ring 200 is provided thereon with a position dedicated for the limiting portion 220, and position change tendency of the limiting portion 220 is limited by the end cap 100.

In a case where the drive shaft 110 rotates in the first direction, one end of the friction ring 200 is limited, while the other end can be driven by the drive shaft 110 to act towards the first direction, whereby the drive shaft 110 may be clasped by the friction ring; in a case where the drive shaft 110 rotates in the second direction, the two ends of the friction ring 200 act to the contrary, where the originally limited end acts towards the second direction while the other end is limited, so that the friction ring 200 may also clasp the drive shaft 110, whereby the self-locking arrangement realizes two-way self-locking to the drive shaft 110; as such, during rotating of the drive shaft 110, the self-locking arrangement can always apply a friction force against the drive shaft 110, so that the motor may stop more quickly, which not only enhances motor control precision but also gives the motor a self-locking capability in an idle state, whereby motor stability is maintained.

In the example embodiments above, an end of the friction ring 200 being driven by the drive shaft 110 to act refers to the end of the friction ring 200 being driven by the drive shaft 110 to be deformed towards the rotating direction of the drive shaft 110, whereby the length of the notch 210 is increased or decreased (the length of the notch 210 refers to the peripheral length of the friction ring 200), causing increase or decrease of the relative acting force between the friction ring 200 and the drive shaft 110; or, the end of the friction ring 200 being driven by the drive shaft 110 to motion means the end of the friction ring 200 having a tendency of deformation towards the rotating direction of the drive shaft 110 due to the friction force of the drive shaft 110, where although the length of the notch 210 is not changed, the relative acting force between the friction ring 200 and the drive shaft 110 may be increased or decreased.

Different from the example embodiments above, in another example embodiment of the disclosure, the friction ring 200 can implement one-way self-locking to the drive shaft 110.

Referring to Fig. 8, in some implementations, at least one limiting portion 220 is provided, the limiting portion 220 being provided at one side of the two sides of the notch 210, the other side being a free end 230.

In the preceding example embodiments, the limiting portion 220, after being fitted with the end cap 100, serves to limit the friction ring 200; in this example embodiment, the limiting portion 220 is provided at one of the two ends of the friction ring 200, so that action of the free end 230 is not limited, which will be driven to act by the friction force between the drive shaft 110 and the friction ring 200 when the drive shaft 110 rotates.

In a case where the drive shaft 110 rotates normally along the second direction, the free end 230 is driven to act towards the second direction, while the other end of the friction ring is limited by the limiting portion 220 to maintain stationary, reducing the relative acting force between the drive shaft 110 and the friction ring 200, whereby the friction force is reduced, which has less impact on the drive shaft 110 and reduces power loss of the driver;
in a case where the drive shaft 110 rotates along the first direction, the free end 230 is driven to act towards the first direction, while the other end of the friction ring is limited by the limiting portion 220 to maintain stationary, which increases the relative acting force between the drive shaft 110 and the friction ring 200, whereby the friction force against the drive shaft 110 increases.

The higher a thickness of the friction ring 200, the less likely deformation occurs; in the one-way self-locking solution, the one-way self-locking performance may be improved through thickness design of the friction ring 200. Referring to Fig. 9, in another example embodiment of the disclosure, a raised ridge 240 with a width identical to the friction ring 200 is provided from the free end 230 at the outer periphery of the friction ring 200, a length of the raised ridge 240 being not more than half of that of the friction ring 200.

Of the two ends of the friction ring 200, one end is provided with the limiting portion 220, and the other end, which is a free end 230, is provided with a raised ridge 240 at the outer periphery; in this way, the friction ring 200 can realize one-way self-locking to the drive shaft 110. The raised ridge 240 has a width identical to that of the friction ring 200, such that the portion of the friction ring 200 on which the raised ridge 240 is disposed only differs from the remaining portion in thickness, where the acting force between the thicker part of the friction ring 200 and the drive shaft 110 increases, while the thinner part of the friction ring 200 is more easily deformed, whereby a larger friction force is produced upon braking, and during normal operation, the produced friction force also decreases relatively, further reducing power loss of the driver.

Different from the preceding example embodiment, a further example embodiment of the disclosure provides a friction ring 200 of another structure.

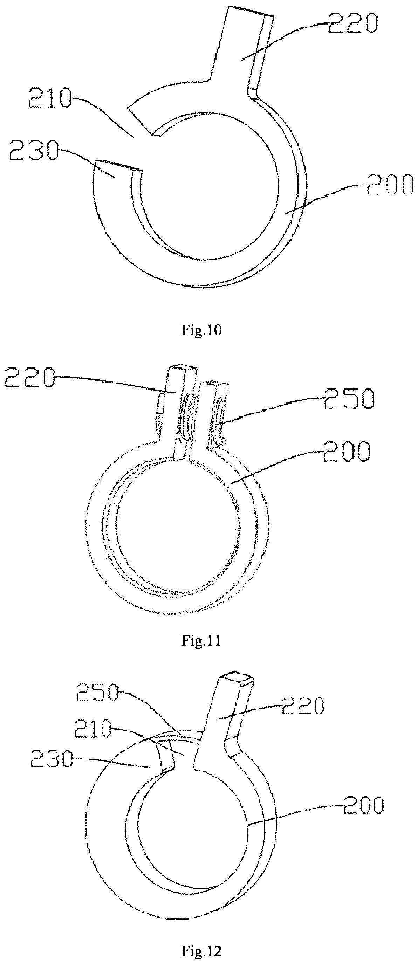

Referring to Fig. 10, a thickness of the friction ring 200 is gradually reduced inwards from the two ends, so that the two ends of the friction ring 200 are the thickest; therefore, the relative acting force between the two ends of the friction ring 200 and the drive shaft 110 is also greater. The middle portion of the friction ring 200 is thinner, so that deformation easily occurs there; as such, the braking force generated upon braking may also increase and the friction force generated during normal operation is reduced. The friction ring 200 of this structure is not only adapted to the one-way self-locking solution of the self-locking arrangement to the drive shaft 110, but also adapted to the two-way self-locking solution.

Different from the two example embodiments described *supra,* in another example implementation of the disclosure, the center of the friction ring is offset from the axis of the drive shaft; as such, after the friction ring is sleeved over the drive shaft, a clearance is formed between part of the friction ring and the drive shaft; without support from the drive shaft, this part of friction ring is more easily deformed. In a case where the friction ring is set for implementing one-way self-locking to the drive shaft, upon braking, the drive shaft brings the friction ring to be deformed, thereby generating a self-locking force to realize self-locking; during normal rotation, the drive shaft brings the friction ring to be deformed reversely, which reduces the engagement area between the friction ring and the drive shaft, significantly reducing the impact of friction force upon rotation of the drive shaft.

Referring to Fig. 11, based on the example embodiments described *supra,* in another example embodiment of the disclosure, a connecting element 250 connecting the two ends of the friction ring 200 is provided at the notch 210.

The connecting element 250 serves to maintain stability of the friction ring 200. The friction ring 200 mounted on the drive shaft 110 may be radially limited by the connecting element 250, preventing the friction ring 200 from being disengaged from the drive shaft 110 during assembling of the end cap 100.

In a case where the self-locking arrangement is a two-way self-locking arrangement, the connecting element 250 may also be connected to a limiting portion 220 at two ends of the friction ring 200.

The connecting element 250 has a plurality of structures, including, but not limited to, the following types.

The connecting element 250 may be a spring. The two ends of the spring are connected to the two ends of the friction ring 200, respectively. The spring has elasticity and can be deformed in the radial and axial directions under stress, without affecting action of the two ends of the friction ring 200. The spring may select a compressed spring, which can apply an acting force against the two ends of the friction ring 200 towards the direction of the notch 210 so as to increase the braking force. In a case where the self-locking arrangement is a one-way self-locking arrangement, the spring may also select a tension spring, which can apply an acting force against two ends of the friction ring 200 distant from the notch 210, thereby reducing power loss of the motor during normal operation.

The connecting element may be a rigid element passing through two ends of the friction ring and clearance-fit with the friction ring; since they are not fixed relative to each other, the connecting element does not affect action of the two ends of the friction ring. The rigid element may be a short shaft, a pin being inserted in the radial direction of the short shaft, whereby an axial displacement distance of the short shaft relative to the friction ring may be limited.

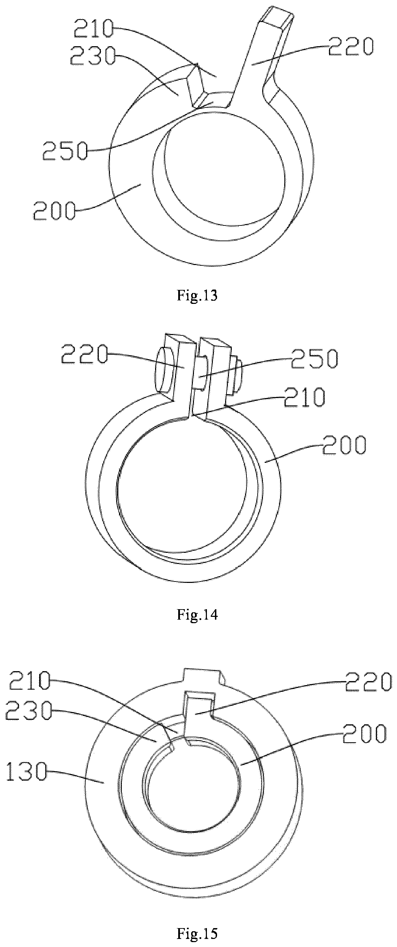

Referring to Figs. 12 and 13, in an alternative implementation, the connecting element 250 and the friction ring 200 are made of a same material and one-piece formed with the friction ring 200; the thickness of the connecting element 250 is less than that of the friction ring 200, so that the notch 210 may be formed on the friction ring 200; since the connecting element 250 is thinner, it does not affect action of the two ends of the friction ring 200. The connecting element 250 may be connected to the outer periphery of the friction ring 200 (as illustrated in Fig. 12) or connected to the inner periphery of the friction ring 200 (as illustrated in Fig. 13); the two settings of the connecting element 250 differ in the opening direction of the notch 210; in addition, the connecting element may also be disposed at a middle position between the two ends of the friction ring.

In addition to the solutions above, the connecting element 250 also allows the self-locking arrangement to perform two-way self-locking to the drive shaft 110. Referring to Fig. 14, in an implementation, the connecting element 250 is a screw passing through the two ends of the friction ring 200; a nut is attached on the screw, where the screw and the nut are mounted after the friction ring 200 has been assembled on the drive shaft 110, so that by applying an acting force against the two ends of the friction ring 200, the drive shaft 110 is clasped; in this way, the friction ring 200 is always in a state of clasping the drive shaft 110, thereby realizing two-way self-locking to the drive shaft 110.

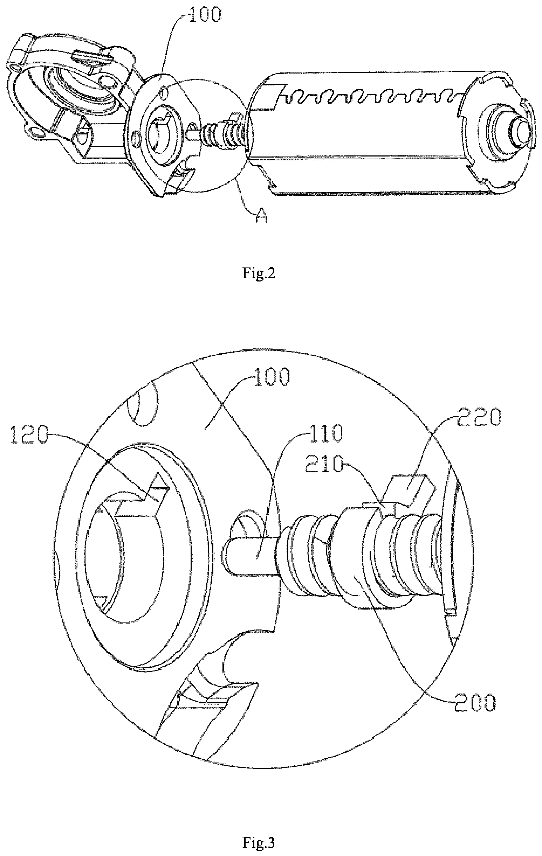

Referring to Figs. 3 to 14, based on the example embodiments described *supra,* in another example embodiment of the disclosure, an assembly structure between the limiting portion 220 and the end cap 100 is illustrated.

Referring to Fig. 3 to 15, the limiting portion 220 is a raised portion protruding at the outer periphery of the friction ring 200, and a catch portion 120 fitted with the raised portion being provided at an inner wall of the end cap 100, where positional change of the raised portion may be limited after the raised portion has been snapped into the catch portion 120; as such, the friction ring 200 cannot rotate synchronously with the drive shaft 110; in addition, the rotational limitation may be implemented just by snapping the raised portion into the catch portion 120; therefore, a non-interference-fitting manner between the catch portion 120 and the raised portion may facilitate mounting of the friction ring 200.

In this example embodiment, the raised portion is a stop lever, and the catch portion 120 is a snap groove, the stop lever being snapped into the snap groove. The stop lever has a longer length, which, after being fitted with the snap groove, is not easily disengaged from the snap groove, whereby structural stability of the friction ring 200 is guaranteed. This fitting manner is a direct engagement manner between the end cap 100 and the friction ring 200.

Alternatively, a catch element is sleeved outside the raised portion, the catch element being snapped in the catch portion; the catch element and the friction ring are two discrete structures. The catch element may enhance the fitting strength between the raised portion and the catch portion. The catch element may continue service during replacement of the friction ring. This fitting manner is an indirect engagement manner between the end cap and the friction ring.

Alternatively, as illustrated in Fig. 15, a limiting sleeve 130 is provided in the end cap 100, the catch portion 120 is provided on the limiting sleeve 130, and the friction ring 200 is snap-fitted in the limiting sleeve 130; in this way, the friction ring 200 is fitted with the end cap 100 via the limiting sleeve 130. This structure is applicable to a case where the end cap 100 has a relatively large structure; in this case, a larger friction ring 200 enhances the strength of the friction ring 200, but the driving effect of the drive shaft 110 with respect to the friction ring 200 is degraded, and the braking force is also decreased. Provision of the limiting sleeve 130 may ensure self-locking performance of the self-locking arrangement.

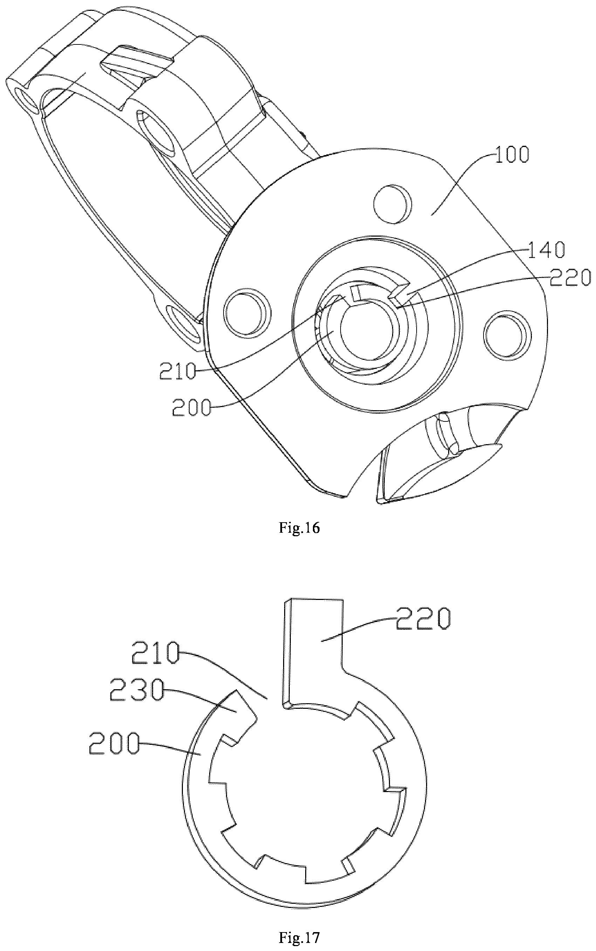

Referring to Fig. 16, in addition, the limiting portion 220 may also be a recessed groove provided at the outer periphery of the friction ring 200, and a snap block 140 fitted with the recessed groove protrudes from the inner wall of the end cap 100, so that fitting between the snap block 140 and the recessed groove may limit circumferential rotation of the friction ring 200, whereby the drive shaft 110 is self-locked. The snap block 140 protrudes from the inner wall of the end cap 100, which increases the thickness of the snap block 140, so that the friction ring 200 at the recessed groove is interference-fitted with the drive shaft 110, whereby structural stability of the friction ring 200 at that position is maintained without affecting deformation of the other portions of the friction ring 200.

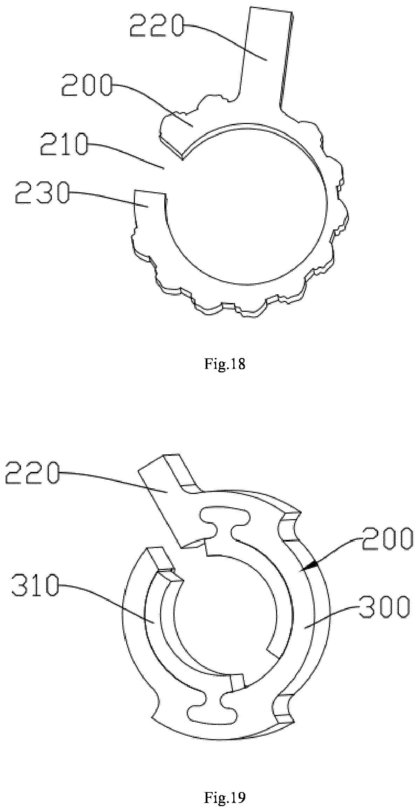

The plurality of example embodiments described *supra* relate to different structures of the friction ring 200. The friction ring 200 may also take on other forms, e.g., the friction ring 200 illustrated in Fig. 17 has a jagged inner peripheral surface; the friction ring 200 illustrated in Fig. 18 has a limiting portion 220 and a plurality of other raised portions on its outer peripheral surface. Any structure with a C-shaped ring body having a part adapted to limit rotation of the ring body falls within the scope of the disclosure.

In addition, the friction ring 200 may also have a structure illustrated in Fig. 19, comprising an outer ring 300 and an inner ring 310 which are independent from each other, the limiting portion 220 being provided at the outer periphery of the outer ring 300, the outer ring 300 being sleeved outside the inner ring 310, the inner ring 310 being in engagement with the drive shaft 110; the acting force between the inner ring 310 and the drive shaft 110 drives the outer ring 300 to act so that the friction ring 200 clasps the drive shaft 110, whereby the acting force between the inner ring 310 and the drive shaft 110 increases. In this example implementation, the outer ring 300 of the friction ring 200 may select a material easily deformable, and the inner ring 310 may select a material with a relatively high friction coefficient.

The disclosure further provides a linear actuator, which is generally applied to lifting equipment, e.g., a lifting table and a lifting bed, the self-locking arrangement for a motor as described *supra* being provided as a drive component in the linear actuator; the motor-mounted linear actuator is further installed in the lifting equipment. In a case where the lifting equipment bears a relatively heavy load, the self-locked driver ensures that the drive shaft 110 does not rotate reversely causing retraction of the lifting equipment, whereby stability of the equipment is maintained.

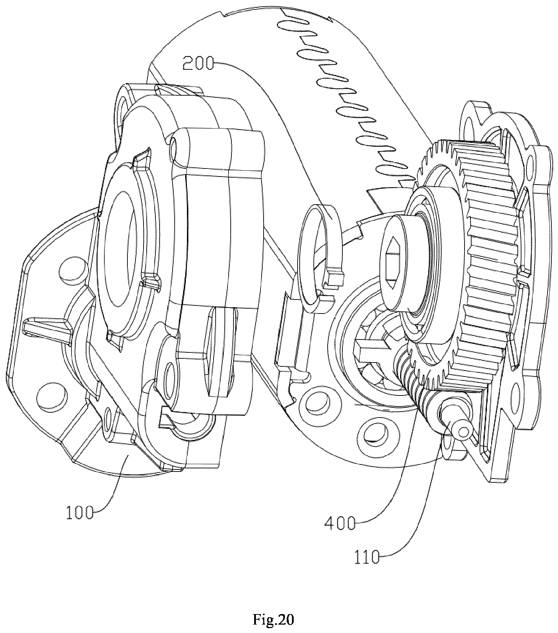

As illustrated in Fig. 20, the linear actuator comprises a column, a lead screw assembly disposed in the column, and a worm gear 400 for driving the lead screw assembly, a drive shaft 110 being a worm fitted with the worm gear 400; when a motor controls the worm to rotate, the worm gear 400 is driven to rotate, and then the lead screw assembly is driven by the worm gear 400; in this way, the lead screw assembly may control the column to extend or retract; a friction ring 200 on the worm enables self-lock to the worm; in addition, the friction ring 200 may also be provided on a hub of the worm gear 400, which also enables self-lock to the worm gear 400; the cooperation between the friction ring 200 and the motor enhances self-locking performance of the linear actuator; while since the lead screw assembly has a very large torque, the friction ring 200 cannot be mounted on the screw rod.

The end cap 100 refers to a part of cover body of a gearbox, and a portion of the end cap 100 connected to the housing of the motor defines a space for accommodating the self-locking arrangement, and a portion of the end cap 100 connected to remaining part of the cover body of the gearbox defines a space for accommodating the worm gear 400.

What have been described above are only embodiments of the disclosure; however, the protection scope of the disclosure is not limited thereto. A person skilled in the art should understand that the disclosure includes, but is not limited to, the contents described in the drawings and the embodiments. Any modifications without departing from the functions and structural principles of the disclosure will be included within the scope of the claims.

## Claims

1. A self-locking arrangement for a motor, comprising an end cap mounted on the motor and a friction ring sleeved over a drive shaft of the motor, a notch being provided on the friction ring, a limiting portion being provided at an outer periphery of the friction ring, the end cap being fitted with the limiting portion, so that the friction ring clasps the drive shaft in a case where the drive shaft rotates along a first direction.

2. The self-locking arrangement for a motor according to claim 1, wherein at least two limiting portions are provided, the limiting portions being disposed on two sides of the notch, so that the friction ring clasps the drive shaft in a case where the drive shaft rotates along a second direction opposite the first direction.

3. The self-locking arrangement for a motor according to claim 1, wherein at least one limiting portion is provided, one of the two sides of the notch being provided with the at least one limiting portion, the other side of the notch being a free end.

4. The self-locking arrangement for a motor according to claim 3, wherein a raised ridge with a width identical to a width of the friction ring is provided at the outer periphery of the friction ring, the raised ridge being provided at the free end and having a length not exceeding half of a length of the friction ring.

5. The self-locking arrangement for a motor according to any one of claims 1 to 3, wherein a thickness of the friction ring is gradually shrunk inwards from two ends of the friction ring.

6. The self-locking arrangement for a motor according to any one of claims 1 to 4, wherein a connecting element connecting two ends of the friction ring is provided at the notch.

7. The self-locking arrangement for a motor according to claim 6, wherein the connecting element is a spring; or, the connecting element is an elastic strip made of an elastic material; or, the connecting element is a rigid element passing through two ends of the friction ring; or, the connecting element and the friction ring are one-piece formed, a thickness of the connecting element being smaller than the thickness of the friction ring.

8. The self-locking arrangement for a motor according to any one of claims 1 to 4, wherein the limiting portion is a raised portion protruding from the outer periphery of the friction ring, and a catch portion fitted with the raised portion being provided on the end cap.

9. The self-locking arrangement for a motor according to claim 8, wherein the raised portion is a stop lever and the catch portion is a snap groove, the stop lever being snapped into the snap groove.

10. The self-locking arrangement for a motor according to claim 8, wherein a limiting sleeve is provided in the end cap, the catch portion is provided on the limiting sleeve, and the friction ring is snapped in the limiting sleeve; or, a catch sleeve is sleeved outside the limiting portion, the catch sleeve being fitted with the catch portion.

11. The self-locking arrangement for a motor according to any one of claims 1 to 4, wherein the limiting portion is a recessed groove provided at the outer periphery of the friction ring, and a snap block fitted with the recessed groove is provided on the end cap.

12. The self-locking arrangement for a motor according to any one of claims 1 to 4, wherein center of the friction ring is offset from an axis of the drive shaft.

13. A linear actuator, comprising the self-locking arrangement for a motor according to any one of claims 1 to 12.

14. The linear actuator according to claim 13, wherein the linear actuator comprises a column, a lead screw assembly disposed in the column, and a worm gear for driving the lead screw assembly, the drive shaft being a worm fitted with the worm gear, the friction ring being also provided on a hub of the worm gear.
